(19) Europäisches Patentamt
European Patent Office
Office européen des brevets

(11) **EP 2 100 151 B1**

(12) **EUROPÄISCHE PATENTSCHRIFT**

(45) Veröffentlichungstag und Bekanntmachung des Hinweises auf die Patenterteilung:
**01.03.2017 Patentblatt 2017/09**

(21) Anmeldenummer: **07821328.7**

(22) Anmeldetag: **15.10.2007**

(51) Int Cl.:
*G01P 15/08* (2006.01)    *G01P 15/125* (2006.01)

(86) Internationale Anmeldenummer:
**PCT/EP2007/060961**

(87) Internationale Veröffentlichungsnummer:
**WO 2008/071479 (19.06.2008 Gazette 2008/25)**

(54) **MIKROMECHANISCHER Z-SENSOR**

MICROMECHANICAL Z-SENSOR

CAPTEUR Z MICROMÉCANIQUE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **12.12.2006 DE 102006058747**

(43) Veröffentlichungstag der Anmeldung:
**16.09.2009 Patentblatt 2009/38**

(73) Patentinhaber: **Robert Bosch GmbH**
**70442 Stuttgart (DE)**

(72) Erfinder:
• **CLASSEN, Johannes**
**72764 Reutlingen (DE)**
• **TEBJE, Lars**
**72770 Reutlingen (DE)**

(56) Entgegenhaltungen:
**WO-A-02/082096**

## Beschreibung

Stand der Technik

Die Erfindung geht aus von einem mikromechanischen z-Sensor mit einer Empfindlichkeit, mit einer Torsionsfeder und einer seismischen Zusatzmasse, wobei die Torsionsfeder eine Federbreite aufweist, wobei die seismische Zusatzmasse Stege mit einer Stegbreite aufweist.

Für kapazitive Beschleunigungssensoren mit Detektionsrichtung senkrecht zur Waferebene, sogenannten z-Sensoren, werden vielfach Wippen-Konstruktionen genutzt. Das Sensorprinzip dieser Wippen basiert auf einem Feder-Masse-System, in welchem eine bewegliche seismische Masse mit jeweils zwei auf dem Substrat fixierten Gegenelektroden einen Plattenkondensator bildet. Die seismische Masse ist über eine Torsionsfeder mit der Unterlage verbunden. Sind die Massestrukturen auf den beiden Seiten der Torsionsfeder unterschiedlich groß, so wird sich beim Einwirken einer Beschleunigung die Massestruktur relativ zur Torsionsfeder als Drehachse drehen. Eine solche Massendifferenz wird z.B. durch eine asymmetrisch zu der Torsionsfeder angebrachte Zusatzmasse hervorgerufen. Damit wird der Abstand der Elektroden auf der Seite mit der größeren Masse kleiner und auf der anderen Seite größer. Die sich daraus ergebende Kapazitätsänderung ist ein Maß für die einwirkende Beschleunigung. Das Sensorprinzip dieser Wippen wird z.B. in der europäischen Offenlegungsschrift EP 0 244 581 A1 oder in der europäischen Offenlegungsschrift EP 0 773 443 A1 beschrieben.

Ein zentrales Element dieses Sensortyps ist dessen Torsionsfeder. Die Torsionsfeder bestimmt maßgeblich die mechanische Empfindlichkeit des Sensors. Durch Variationen im Herstellungsprozeß kommt es zu Schwankungen in der Breite der Torsionsfedern, welche die Empfindlichkeit stark beeinflussen. Bei Wippenstrukturen nach dem Stand der Technik findet keine Kompensation dieser Empfindlichkeitsschwankungen statt.

Offenbarung der Erfindung

Die Aufgabe der Erfindung ist, eine Massestruktur zu finden, bei der sich der Einfluß von Prozeßschwankungen während der Herstellung auf die Empfindlichkeit des Sensors weniger stark auswirkt.

Vorteile der Erfindung

Die Erfindung geht aus von einem mikromechanischen z-Sensor mit einer Empfindlichkeit, mit einer Torsionsfeder und einer seismischen Zusatzmasse, wobei die Torsionsfeder eine Federbreite aufweist, wobei die seismische Zusatzmasse Stege mit einer Stegbreite aufweist. Der Kern der Erfindung besteht darin, daß die Stegbreite kleiner als die Federbreite gewählt wird.

Eine vorteilhafte Ausgestaltung der Erfindung sieht vor, daß Stegbreite kleiner als die Hälfte der Federbreite und größer als ein Viertel der Federbreite, bevorzugt als ein Drittel der Federbreite gewählt wird. Vorteilhaft ist auch, daß der z-Sensor eine Massestruktur aufweist, welche weitere Stege mit einer weiteren Stegbreite aufweist und daß die Stegbreite und die weitere Stegbreite voneinander verschieden sind. Vorteilhaft ist, daß Stege mit verschiedener Breite vorgesehen sind und daß die Stegbreite eine mittlere Breite ist.

Der Kern der Erfindung besteht in der geeignet in Abhängigkeit von der Torsionsfeder gewählten konstruktiven Ausführung der Wippenstruktur im Bereich der Zusatzmasse. Die Zusatzmasse besitzt dabei eine an die Breite der Torsionsfeder angepaßte Struktur aus miteinander verbundenen Balkenelementen. Diese Struktur resultiert in einem verminderten Streubereich der Empfindlichkeit des Sensors, was u.a. vorteilhaft für die nachgeschaltete Auswerteelektronik ist.

Die Druckschrift WO 02/082096 A offenbart einen mikromechanischen z-Sensor mit einer Empfindlichkeit, mit einer Torsionsfeder und einer seismischen Zusatzmasse, wobei die Torsionsfeder eine Federbreite aufweist, wobei die seismische Zusatzmasse Stege mit einer Stegbreite aufweist.

Die Erfindung kann prinzipiell an jedem nach dem Wippenprinzip aufgebauten Beschleunigungssensor eingesetzt werden. Die Erfindung ist einfach umsetzbar und bietet das Potential, die benötigte Auswerteelektronik zu vereinfachen oder den Sensor-Chip zu verkleinern. Dies kann zu Kostenvorteilen oder besserer Leistung der Sensoren führen.

Zeichnung

Figur 1 zeigt einen z-Sensor im Stand der Technik in Seitenansicht, Figur 2 zeigt den z-Sensor im Stand der Technik in Draufsicht und
Figur 3 zeigt einen erfindungsgemäßen z-Sensor in Draufsicht.

Ausführungsbeispiel

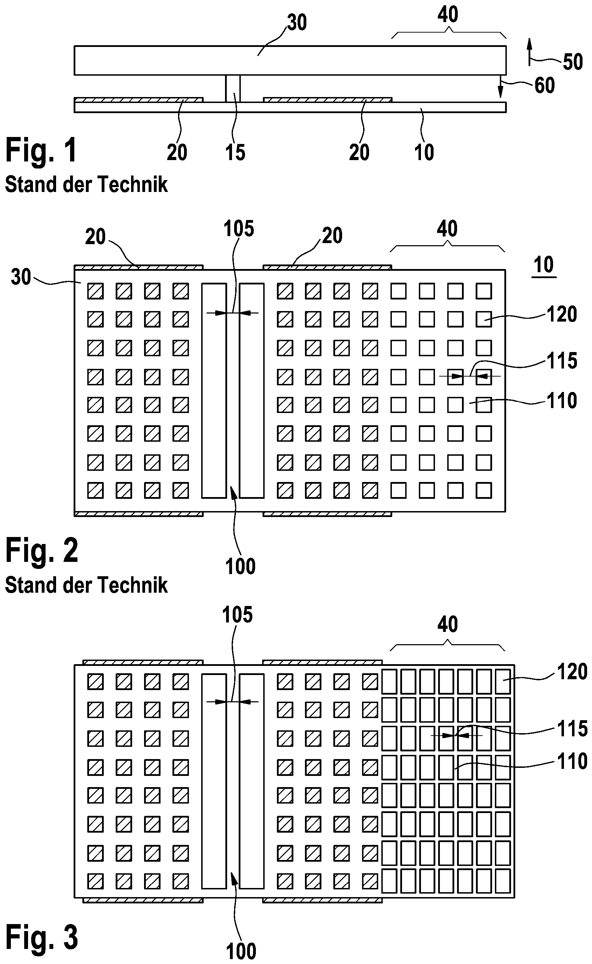

Figur 1 zeigt einen z-Sensor im Stand der Technik in Seitenansicht. Die Darstellung ist nur schematisch. Es ist ein oberflächenmikromechanischer Sensor mit einem Substrat 10 gezeigt, welches eine hauptsächliche Oberfläche in einer Ebene (x; y) aufweist. Über dem Substrat 10 ist an einer Verankerung 15 eine Massestruktur 30 angeordnet. Unterhalb der Massestruktur 30 sind auf dem Substrat 10 Elektroden 20 angeordnet. Die Massestruktur 30 weist, asymmetrisch zur Verankerung 15 angeordnet, eine Zusatzmasse 40 auf. Im Betriebszustand einer beschleunigten Bewegung des Z-Sensors mit einer Beschleunigungskomponente 50 senkrecht zur Ebene (x; y) wird die Massestruktur 30 mit der Zusatzmasse 40 in Bezug auf das Sensorsubstrat 10 in z-Richtung 60 ausgelenkt.

Figur 2 zeigt den z-Sensor im Stand der Technik in Draufsicht. Die Massestruktur 30 weist eine Torsionsfeder 100 mit einer Federbreite 105 auf Die Torsionsfeder ist mittels der darunterliegenden Verankerung 15 mit dem Substrat 10 verbunden. Die Empfindlichkeit dieses Sensortyps hängt maßgeblich von der Steifigkeit der Torsionsfeder 100 und der Massenverteilung innerhalb der Wippenstruktur ab. Eine hohe Empfindlichkeit kommt dabei durch eine "weiche" Torsionsfeder 100 und/oder eine große Zusatzmasse 30 zustande. Aus technologischen Gründen ist die bewegliche Wippenstruktur mit Löchern 120 versehen (perforiert). Für die nachfolgenden Betrachtungen ist es hilfreich, sich die Struktur aus einzelnen Stegen 110 zusammengesetzt vorzustellen. Die im Stand der Technik erwähnten Variationen im Herstellungsprozeß wirken sich nicht nur auf die Torsionsfeder 100, sondern auch auf die perforierte Wippenstruktur aus. Jeder Steg 110 unterliegt dabei grundsätzlich den gleichen Schwankungen wie die Torsionsfeder 100, d.h. eine Verminderung der Federbreite 105 geht mit einer verkleinerten Stegbreite 115 einher und umgekehrt. Die Federbreite 105 geht mit der dritten Potenz in die Empfindlichkeit $E$ (Auslenkung dividiert durch Beschleunigung) des Sensors ein, während die Zusatzmasse 40, die von der Stegbreite 115 abhängt, linear eingeht:

$$E \propto \frac{m_{Zusatzmasse}}{b_{Feder}^3} \ . \qquad \qquad (\text{Gl. 1})$$

Sind nun die Torsionsfeder 100 und die Stege 110 der Zusatzmasse 40 von der gleichen absoluten Breitenschwankung $\Delta b$ betroffen, so gilt näherungsweise für die von Prozeßschwankungen betroffene Zusatzmasse

$$m_{Zusatzmasse,\text{Pr}\,ozess} \propto b_{Massesteg}\left(1+\frac{\Delta b}{b_{Massesteg}}\right), \qquad (\text{Gl. 2})$$

und für die schwankende Federbreite

$$b_{Feder,\text{Pr}\,ozess}^3 \approx b_{Feder}^3\left(1+\frac{\Delta b}{b_{Feder}}\right)^3 \approx b_{Feder}^3\left(1+3\frac{\Delta b}{b_{Feder}}\right). \qquad (\text{Gl. 3})$$

Damit ergibt sich für die Empfindlichkeit nach Durchlaufen des Herstellungsprozesses

$$E_{\text{Pr}\,ozess} \propto \frac{b_{Massesteg}\left(1+\dfrac{\Delta b}{b_{Massesteg}}\right)}{b_{Feder}^3\left(1+3\dfrac{\Delta b}{b_{Feder}}\right)} \ . \qquad (\text{Gl. 4})$$

Eine Kompensation der Prozeßschwankungen tritt auf für:

$$b_{Massesteg} \approx \frac{b_{Feder}}{3} \ , \qquad \qquad (\text{Gl. 5})$$

d.h. wenn die Massesteg-Breite 115 einem Drittel der Federbreite 105 entspricht. Dann kürzen sich die Ausdrücke in Klammern und die Empfindlichkeit wird in erster Ordnung unabhängig von Schwankungen $\Delta b$ der Strukturbreite.

Zur Empfindlichkeitskompensation bezüglich des Parameters $\Delta b$ muß somit eine Anpassung der Massestruktur an die Breite 105 der Torsionsfeder 100 nach Gl. 5 erfolgen. Eine entsprechende Struktur ist in Figur 3 dargestellt.

Figur 3 zeigt einen erfindungsgemäßen z-Sensor in Draufsicht. Erfindungsgemäß ist im Bereich der Zusatzmasse 40 für die Stege 110 die Stegbreite 115 ein Drittel der Federbreite 105 der Torsionsfeder 100. Ist es aus technologischen Gründen nicht möglich, den Massesteg hinreichend schmal zu gestalten, so ist ein Wert für die Stegbreite zu wählen, der Gl. 5 möglichst nahe kommt. Im Vergleich zu einer Nichtbeachtung von Gl. 5 tritt dann eine nicht vollständige, aber verbesserte Kompensation ein.

Die restliche Massestruktur 30 der Wippe kann eine beliebige Perforation, auch identisch zur Zusatzmasse 40 aufweisen.

**Patentansprüche**

1. Mikromechanischer z-Sensor mit einer Empfindlichkeit, mit einer Torsionsfeder (100) und einer seismischen Zusatzmasse (40),

   - wobei die Torsionsfeder (100) eine Federbreite (105) aufweist,
   - wobei die seismische Zusatzmasse (40) Stege (110) mit einer Stegbreite (115) aufweist, **dadurch gekennzeichnet, daß**

   die Stegbreite (115) kleiner als die Federbreite (105) gewählt wird.

2. Mikromechanischer z-Sensor nach Anspruch 1, **dadurch gekennzeichnet, daß** die Stegbreite (115) kleiner als die Hälfte der Federbreite (105) und größer als ein Viertel der Federbreite (105), bevorzugt als ein Drittel der Federbreite (105) gewählt wird.

3. Mikromechanischer z-Sensor nach einem der vorhergehenden Ansprüche, **dadurch gekennzeichnet, daß** der z-Sensor eine Massestruktur (30) aufweist, welche weitere Stege mit einer weiteren Stegbreite aufweist und daß die Stegbreite (115) und die weitere Stegbreite voneinander verschieden sind.

4. Mikromechanischer z-Sensor nach einem der vorhergehenden Ansprüche, **dadurch gekennzeichnet, daß** Stege (110) mit verschiedener Breite vorgesehen sind und daß die Stegbreite (115) eine mittlere Breite ist.

**Claims**

1. Micromechanical z-sensor having a sensitivity, having a torsion spring (100) and an additional seismic mass (40),

   - the torsion spring (100) having a spring width (105),
   - the additional seismic mass (40) having webs (110) with a web width (115),

   **characterized in that**
   the web width (115) is chosen to be less than the spring width (105).

2. Micromechanical z-sensor according to Claim 1, **characterized in that** the web width (115) is chosen to be less than half the spring width (105) and more than one-quarter of the spring width (105), preferably more than one-third of the spring width (105).

3. Micromechanical z-sensor according to one of the preceding claims, **characterized in that** the z-sensor has a mass structure (30) which has further webs with a further web width, and **in that** the web width (115) and the further web width are different from each other.

4. Micromechanical z-sensor according to one of the preceding claims, **characterized in that** webs (110) of different widths are provided, and **in that** the web width (115) is an average width.

**Revendications**

1. Capteur z micromécanique avec une sensibilité, avec un ressort de torsion (100) et avec une masse additionnelle sismique (40),

   - dans lequel le ressort de torsion (100) présente une largeur de ressort (105),
   - dans lequel la masse additionnelle sismique (40) présente des nervures (110) avec une largeur de nervure (115),

   **caractérisé en ce que** la largeur de nervure (115) est choisie plus petite que la largeur de ressort (105).

2. Capteur z micromécanique selon la revendication 1, **caractérisé en ce que** la largeur de nervure (115) est choisie plus petite que la moitié de la largeur de ressort (105) et plus grande qu'un quart de la largeur de ressort (105), de préférence égale à un tiers de la largeur de ressort (105).

3. Capteur z micromécanique selon l'une quelconque des revendications précédentes, **caractérisé en ce que** le capteur z présente une structure de masse (30), qui présente d'autres nervures avec une autre largeur de nervure et **en ce que** la largeur de nervure (115) et l'autre largeur de nervure sont différentes l'une de l'autre.

4. Capteur z micromécanique selon l'une quelconque des revendications précédentes, **caractérisé en ce qu'**il est prévu des nervures (110) avec une largeur différente et **en ce que** la largeur de nervure (115) est une largeur moyenne.

**Fig. 1**
Stand der Technik

**Fig. 2**
Stand der Technik

**Fig. 3**

**IN DER BESCHREIBUNG AUFGEFÜHRTE DOKUMENTE**

**In der Beschreibung aufgeführte Patentdokumente**

- EP 0244581 A1
- EP 0773443 A1

- WO 02082096 A